# EUROPÄISCHE PATENTSCHRIFT

(11) **EP 2 029 867 B1**
(45) Veröffentlichungstag und Bekanntmachung des Hinweises auf die Patenterteilung: **06.08.2014**
(21) Anmeldenummer: 07728515.3
(22) Anmeldetag: 25.04.2007
(51) Int. Cl.: F01N 3/10, F01N 11/00, F02B 37/00, F01N 3/025, F01N 3/035, F01N 9/00, F02B 37/013, F02B 37/02

(54) **VORRICHTUNG UND VERFAHREN ZUR ABGASNACHBEHANDLUNG**
DEVICE AND METHOD FOR EXHAUST GAS AFTERTREATMENT
DISPOSITIF ET PROCÉDÉ DE POST-TRAITEMENT DES GAZ D'ÉCHAPPEMENT

(30) Priorität: 06.06.2006 DE 102006026159
(43) Veröffentlichungstag der Anmeldung: 04.03.2009
(73) Patentinhaber: Robert Bosch GmbH, 70442 Stuttgart (DE)
(72) Erfinder: WIRTH, Ralf, Farmington Hills, Michigan 48331 (US); VEIGEL, Wolfram, 74394 Hessigheim (DE); MOTZ, Stefan, 71696 Moeglingen (DE)
(86) Internationale Anmeldenummer: PCT/EP2007/054060
(87) Internationale Veröffentlichungsnummer: WO 2007/141093

(56) Entgegenhaltungen:
- WO-A-2004/099578
- JP-A- 63 309 727
- US-A1- 2004 244 366

## Beschreibung

### Stand der Technik

Die Erfindung geht aus von einer Vorrichtung zur Abgasnachbehandlung nach der Gattung des unabhängigen Patentanspruchs 1 und von einem zugehörigen Verfahren zur Abgasnachbehandlung.

In der Patentschrift EP 1 066 454 B1 wird eine Vorrichtung zur Abgasnachbehandlung für eine aufgeladene Brennkraftmaschine beschrieben.

Zudem ist allgemein bekannt, dass zur thermischen Regeneration eines mit Ruß beladenen Dieselpartikelfilters für eine Dieselbrennkraftmaschine eine Abgastemperatur im Dieselpartikelfilter auf mindestens 600-620°C angehoben wird. Diese Temperaturanhebung kann zu einem Teil durch innermotorische Maßnahmen wie z.B. einer Androsselung, Spritzbeginnverschiebung der Haupteinspritzung oder einer brennenden Nacheinspritzung realisiert werden. Eine weitere Temperaturanhebung kann in der Regel über einen, dem Dieselpartikelfilter vorgelagerten, Oxidationskatalysator realisiert werden. Hierzu wird entweder innermotorisch über eine späte, nicht brennende Nacheinspritzung oder mittels einer nachmotorischen Dosierung ein Regenerationsmittel, z.B. unverbrannter Kraftstoff, ins Abgas eingebracht.

Aus funktionaler Sicht weist eine nicht brennende Nacheinspritzung den Vorteil auf, dass der eingebrachte Kraftstoff nahezu ideal durchmischt den Oxidationskatalysator beaufschlagen kann, wodurch dessen katalytische Oberfläche optimal genutzt werden kann. Die nicht brennende Nacheinspritzung zieht jedoch eine deutliche Ölverdünnung nach sich, wodurch die Ölwechselintervalle drastisch reduziert werden müssen. Ein weiterer Nachteil der nicht brennenden Nacheinspritzung ergibt sich prinzipbedingt dadurch, dass der Motor bei diesem Betrieb eine gewünschte, sehr hohe Kohlenwasserstoffemission aufweist und das Abgasrückführventil während des Regenerationsbetriebs des Dieselpartikelfilter geschlossen bleiben muss, da einem Brennraum sonst über die Frischluftzuführung ungewollt Kraftstoff zugeführt wird, wodurch die Brennkraftmaschine "durchgeht". Die notwendige Abschaltung der Abgasrückführung kann jedoch zu einem starken Anstieg der NOx-Emission während der Regeneration des Dieselpartikelfilters führen, was sich bei häufigen, oder langen Regenerationszeiträumen negativ auf die Zertifizierung der Fahrzeuge auswirken kann. Daher ist die nicht brennende Nacheinspritzung insbesondere bei Nutzfahrzeugen schwierig zu realisieren.

Für den Betrieb einer nachmotorischen Dosierung ergeben sich bei herkömmlichen aufgeladenen Brennkraftmaschinen prinzipiell zwei Einbaupositionen: vor oder nach einem Turbolader. Bei einer Dosierung vor dem Turbolader erhält man wie bei der nicht brennenden Nacheinspritzung eine nahezu ideale Durchmischung durch die Turbine. Allerdings besteht auch hier die Gefahr einer Kraftstoffrückführung über die Abgasrückführung. Eine weitere Schwierigkeit dieser Dosierposition resultiert aus der meist sehr hohen Abgastemperatur am Motorauslasskrümmer. Zum Schutz eines Dosierventils ist daher am Einbauort vor der Turbine in der Regel eine hohe Kühlleistung erforderlich. Die Dosierung nach dem Turbolader löst die Problematik der Kraftstoffrückführung über die Abgasrückführung und erleichtert die Kühlung des Dosierventils. Allerdings muss bei einer Dosierposition nach dem Turbolader auf die aktive Durchmischung durch die Turbine verzichtet werden, wodurch keine gleichmäßige Kraftstoffbeaufschlagung auf den Oxidationskatalysator gewährleistet werden kann, wodurch der Wirkungsgrad abnehmen kann und es zu einem erhöhten Regenerationsmittelschlupf kommen kann.

WO 2004/099578 zeigt eine Abgasanlage zur Regeneration einer Partikelfalle, bei der ein Reduktionsmittel stromaufwärts eines Turboladers in die Abgasanlage eindosiert werden kann.

### Offenbarung der Erfindung

Die erfindungsgemäße Abgasnachbehandlungsvorrichtung für eine zweistufig aufgeladene Brennkraftmaschine mit den Merkmalen des unabhängigen Patentanspruchs 1 hat demgegenüber den Vorteil, dass eine Dosiervorrichtung zum Einbringen eines Regenerationsmittels im Abgasstrang zwischen einer Hockdruckturbine und einer Niederdruckturbine angeordnet ist. Durch die erfindungsgemäße Anordnung der Dosiervorrichtung wird in vorteilhafter Weise eine gute Abgas-Regenerationsmitteldurchmischung für einen hohen Wirkungsgrad eines Oxidationskatalysators erzielt, welcher zur Temperaturanhebung für eine thermische Regeneration eines mit Ruß beladenen Partikelfilters verwendet wird. Zudem wird in vorteilhafter Weise die Kraftstoffrückführung über eine Abgasrückführungsleitung unterbunden, da die Abgasrückführungsleitung und die Dosiervorrichtung durch die Hochdruckturbine voneinander getrennt sind. Ein weiterer Vorteil der erfindungsgemäßen Anordnung der Dosiervorrichtung resultiert daraus, dass die Hochdruckturbine dem Abgas Enthalpie entzieht, wodurch das Abgas an der Dosiervorrichtung im Vergleich zu einer Anordnung am Motorauslasskrümmer deutlich abgekühlt ist, wodurch zur Kühlung des Dosierventils ein geringerer Aufwand erforderlich ist.

Das erfindungsgemäße Verfahren zur Abgasnachbehandlung einer zweistufig aufgeladenen Brennkraftmaschine mit den Merkmalen des unabhängigen Patentanspruchs 5 hat demgegenüber den Vorteil, dass ein Regenerationsmittel zur thermischen Regeneration eines mit Ruß beladenen Partikelfilters zwischen einer Hochdruckturbine und einer Niederdruckturbine in den Abgasstrang eingebracht wird, wobei eine optimale Abgasnachbehandlung ohne zusätzliche

Bauteile, nur unter Ausnutzung des strukturellen Aufbaus des Abgassystems umgesetzt werden kann.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Abgasnachbehandlung und des zugehörigen im unabhängigen Patentanspruch 5 angegebenen Verfahrens möglich.

Besonders vorteilhaft ist, dass die Dosiervorrichtung so vor der Niederdruckturbine angeordnet ist, dass diese die gleichmäßige Durchmischung des Regenerationsmittels und des Abgases im Abgasstrang bewirkt. Das bedeutet, dass die der Dosiervorrichtung im Abgasstrang nachgeordnete Niederdruckturbine in vorteilhafter Weise als aktives Mischerelement genutzt wird.

In Ausgestaltung der erfindungsgemäßen Vorrichtung zur Abgasnachbehandlung ist im Abgasstrang mindestens ein Temperatursensor angeordnet, welcher zur Einstellung der Dosiervorrichtung ausgewertet wird. Alternativ oder zusätzlich kann ein Druckdifferenzsensor vorhanden sein, welcher die Druckdifferenz über dem Partikelfilter bestimmt, wobei aus der bestimmten Druckdifferenz ein Beladungszustand des Partikelfilters ermittelt werden kann.

In Ausgestaltung des erfindungsgemäßen Verfahrens zur Abgasnachbehandlung kann die Einbringung des Regenerationsmittels in den Abgasstrang so erfolgen, dass die Niederdruckturbine eine gleichmäßige Durchmischung des Regenerationsmittels und des Abgases im Abgasstrang bewirkt, wodurch der im Abgasstrang angeordnete Oxidationskatalysator gleichmäßig mit Reduktionsmittel beaufschlagt wird. Ausführungsbeispiele der Erfindung sind in den Zeichnungen dargestellt und werden in der nachfolgenden Beschreibung näher erläutert.

### Kurze Beschreibung der Zeichnungen

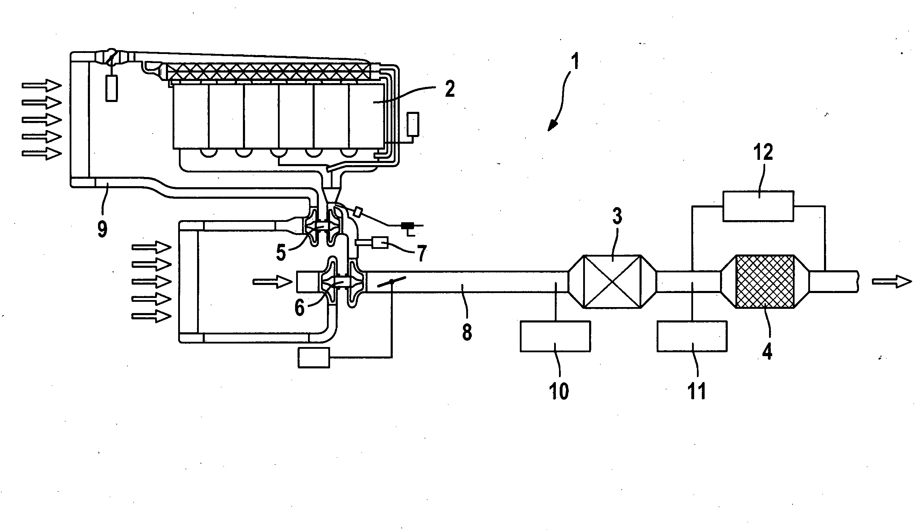

Die einzige Figur zeigt ein Blockdiagramm einer erfindungsgemäßen Abgasnachbehandlungsvorrichtung für eine zweistufig aufgeladene Brennkraftmaschine.

### Ausführungsform(en) der Erfindung

Wie aus der Figur ersichtlich ist, umfasst eine erfindungsgemäße Abgasnachbehandlungsvorrichtung 1 für eine zweistufig aufgeladene Brennkraftmaschine 2 einen Oxidationskatalysator 3, einen Partikelfilter 4 und eine Dosiervorrichtung 7 zum Einbringen eines Regenerationsmittels in einen Abgasstrang 8. Die zweistufige Aufladung der Brennkraftmaschine 2 ist insbesondere für die Einhaltung von zukünftigen Emissionsgrenzwerten im Nutzkraftfahrzeugbereich erforderlich.

Wie aus der Figur weiter ersichtlich ist, lässt sich der strukturelle Aufbau des Abgastraktes der zweistufig aufgeladenen Brennkraftmaschine 2 zur Umsetzung einer optimalen Funktionalität des Oxidationskatalysators 3 unter Verwendung einer nachmotorischen Dosierung des Regenerationsmittels ausnutzen. So ist die Dosiervorrichtung 7 im Abgasstrang 8 erfindungsgemäß zwischen einer Hockdruckturbine 5 und einer Niederdruckturbine 6 angeordnet, welche die zweistufige Aufladung der Brennkraftmaschine 2 bewirken. Die Dosiervorrichtung 7 ist so vor der Niederdruckturbine 6 angeordnet, dass die Niederdruckturbine 6 als aktives Mischerelement genützt werden kann, welches eine gleichmäßige Durchmischung des Regenerationsmittels und des Abgases im Abgasstrang 8 bewirkt. Durch die Anordnung der Dosiervorrichtung 7 hinter der Hochdruckturbine 5 wird eine Rückführung des Regenerationsmittels über eine Abgasrückführungsleitung 9 unterbunden, da die Abgasrückführungsleitung 9 und die Dosiervorrichtung 7 durch die Hochdruckturbine 5 voneinander getrennt sind. Zudem entzieht die Hochdruckturbine 5 dem Abgas Enthalpie, wodurch das Abgas an der Dosiervorrichtung 7 im Vergleich zum Motorauslasskrümmer deutlich abgekühlt ist, wodurch zur Kühlung der Dosiervorrichtung 7 ein geringerer Aufwand erforderlich ist.

Zur Einstellung der Dosiervorrichtung 7 und somit zur Menge des Regenerationsmittels, welches in den Abgasstrang 8 eingebracht wird, werden im dargestellten erfindungsgemäßen Ausführungsbeispiel zwei im Abgasstrang 8 angeordnete Temperatursensoren 10, 11 ausgewertet, wobei ein Temperatursensor 10 vor dem Oxidationskatalysator 3 und ein Temperatursensor 11 nach dem Oxidationskatalysator 3 angeordnet ist. Zur Ermittlung des Beladungszustand des Partikelfilters 4 umfasst die Abgasnachbehandlungsvorrichtung 1 einen Druckdifferenzsensor 12, welcher die Druckdifferenz über dem Partikelfilter 4 bestimmt. Der Druckdifferenzsensor 12 kann auch zur Aktivierung und/oder Einstellung der Dosiervorrichtung 7 ausgewertet werden. Zur thermischen Regeneration des mit Ruß beladenen Partikelfilters 4, vorzugsweise eines Dieselpartikelfilters, wird das Regenerationsmittel, z.B. unverbrannter Brennstoff, über die Dosiervorrichtung 7 zwischen der Hochdruckturbine 5 und der Niederdruckturbine 6 in den Abgasstrang 8 eingebracht, wobei die Niederdruckturbine 6, wie oben bereits ausgeführt ist, eine gleichmäßige Durchmischung des Regenerationsmittels und des Abgases im Abgasstrang 8 bewirkt, wodurch der im Abgasstrang 8 nach der Niederdruckturbine 6 angeordneter Oxidationskatalysator 3 gleichmäßig mit Reduktionsmittel beaufschlagt und mit einem hohen Wirkungsgrad betrieben wird.

Die Erfindung nutzt in vorteilhafter Weise den strukturellen Aufbau des Abgassystems einer zweistufig aufgeladenen Brennkraftmaschine ohne zusätzliche Bauteile zur Umsetzung einer nachmotorischen Regenerationsmitteldosierung aus und stellt insbesondere für Nutzkraftfahrzeuge ein regenerationssicheres und kostengünstiges Konzept zur Umsetzung eines Partikelfiltersystems zur Verfügung.

## Patentansprüche

1. Abgasnachbehandlungsvorrichtung (1) für eine zweistufig aufgeladene Brennkraftmaschine (2), mit einem Partikelfilter (4), einem dem Partikelfilter (4) vorgelagerten Oxidationskatalysator (3) und einer Dosiervorrichtung (7) zum Einbringen eines Regenerationsmittels in einen Abgasstrang (8), **dadurch gekennzeichnet, dass** die Dosiervorrichtung (7) im Abgasstrang (8) zwischen einer Hockdruckturbine (5) und einer Niederdruckturbine (6) angeordnet ist, welche die zweistufige Aufladung der Brennkraftmaschine (2) bewirken, wobei der Oxidationskatalysator (3) im Abgasstrang (8) nach der Niederdruckturbine (6) angeordnet ist.

2. Vorrichtung nach Anspruch 1, **dadurch gekennzeichnet, dass** die Dosiervorrichtung (7) so vor der Niederdruckturbine (6) angeordnet ist, dass die Niederdruckturbine (6) als aktives Mischerelement eine gleichmäßige Durchmischung des Regenerationsmittels und des Abgases im Abgasstrang (8) bewirkt.

3. Vorrichtung nach Anspruch 1 oder 2, **gekennzeichnet durch** mindestens einen im Abgasstrang (8) angeordneten Temperatursensor (10, 11), welcher zur Einstellung der Dosiervorrichtung (7) ausgewertet wird.

4. Vorrichtung nach einem der Ansprüche 1 bis 3, **gekennzeichnet durch** einen Druckdifferenzsensor (12), welcher die Druckdifferenz über dem Partikelfilter (4) bestimmt, aus welcher ein Beladungszustand des Partikelfilters (4) ermittelbar ist.

5. Verfahren zur Abgasnachbehandlung einer zweistufig aufgeladenen Brennkraftmaschine mittels einer Abgasnachbehandlungsvorrichtung (1), wobei die Abgasnachbehandlungsvorrichtung (1) einen Partikelfilter (4), einen dem Partikelfilter (4) vorgelagerten Oxidationskatalysator (3) und eine Dosiervorrichtung (7) zum Einbringen eines Regenerationsmittels in einen Abgasstrang (8) aufweist, **dadurch gekennzeichnet, dass** ein Regenerationsmittel zur thermischen Regeneration eines mit Ruß beladenen Partikelfilters (4) zwischen einer Hochdruckturbine (5) und einer Niederdruckturbine (6) in den Abgasstrang (8) eingebracht wird, wobei der Oxidationskatalysator (3) im Abgasstrang (8) nach der Niederdruckturbine (6) angeordnet ist..

6. Verfahren nach Anspruch 5, **dadurch gekennzeichnet, dass** die Einbringung des Regenerationsmittels in den Abgasstrang (8) so erfolgt, dass die Niederdruckturbine (6) als aktives Mischerelement eine gleichmäßige Durchmischung des Regenerationsmittels und des Abgases im Abgasstrang (8) bewirkt, und ein im Abgasstrang (8) angeordneter Oxidationskatalysator (3) gleichmäßig mit Reduktionsmittel beaufschlagt wird.

## Claims

1. Exhaust-gas aftertreatment device (1) for an internal combustion engine (2) with two-stage supercharging, said exhaust-gas aftertreatment device having a particle filter (4), an oxidation catalytic converter (3) positioned upstream of the particle filter (4), and a dosing device (7) for introducing a regeneration agent into an exhaust tract (8), **characterized in that** the dosing device (7) is arranged in the exhaust tract (8) between a high-pressure turbine (5) and a low-pressure turbine (6) which effect the two-stage supercharging of the internal combustion engine (2), wherein the oxidation catalytic converter (3) is arranged in the exhaust tract (8) downstream of the low-pressure turbine (6).

2. Device according to Claim 1, **characterized in that** the dosing device (7) is arranged upstream of the low-pressure turbine (6) in such a way that the low-pressure turbine (6), as an active mixer element, effects uniform mixing of the regeneration agent and the exhaust gas in the exhaust tract (8).

3. Device according to Claim 1 or 2, **characterized by** at least one temperature sensor (10, 11) which is arranged in the exhaust tract (8) and which is evaluated for the purpose of adjustment of the dosing device (7).

4. Device according to one of Claims 1 to 3, **characterized by** a pressure-difference sensor (12) which determines the pressure difference across the particle filter (4), from which pressure difference a state of loading of the particle filter (4) can be determined.

5. Method for the exhaust-gas aftertreatment of an internal combustion engine with two-stage supercharging by means of an exhaust-gas aftertreatment device (1), wherein the exhaust-gas aftertreatment device (1) has a particle filter (4), an oxidation catalytic converter (3) positioned upstream of the particle filter (4), and a dosing device (7) for introducing a regeneration agent into an exhaust tract (8), **characterized in that** a regeneration agent for the thermal regeneration of a soot-laden particle filter (4) is introduced into the exhaust tract (8) between a high-pressure turbine (5) and a low-pressure turbine (6), wherein the oxidation catalytic converter (3) is arranged in the exhaust tract (8) downstream of the low-pressure turbine (6).

6. Method according to Claim 5, **characterized in that** the introduction of the regeneration agent into the exhaust tract (8) is performed in such a way that the low-pressure turbine (6), as an active mixer element, effects uniform mixing of the regeneration agent and the exhaust gas in the exhaust tract (8), and an oxidation catalytic converter (3) arranged in the exhaust tract (8) is impinged on uniformly with reducing agent.

## Revendications

1. Dispositif de post-traitement de gaz d'échappement (1) pour un moteur à combustion interne (2) suralimenté à deux étages, comprenant un filtre à particules (4), un catalyseur d'oxydation (3) monté en amont du filtre à particules (4) et un dispositif de dosage (7) pour introduire un agent de régénération dans une ligne d'échappement (8), **caractérisé en ce que** le dispositif de dosage (7) est disposé dans la ligne d'échappement (8) entre une turbine haute pression (5) et une turbine basse pression (6), lesquelles réalisent la suralimentation à deux étages du moteur à combustion interne (2), le catalyseur d'oxydation (3) étant disposé dans la ligne d'échappement (8) après la turbine basse pression (6).

2. Dispositif selon la revendication 1, **caractérisé en ce que** le dispositif de dosage (7) est disposé avant la turbine basse pression (6) de telle sorte que la turbine basse pression (6) provoque, en tant qu'élément mélangeur actif, un mélange uniforme de l'agent de régénération et du gaz d'échappement dans la ligne d'échappement (8).

3. Dispositif selon la revendication 1 ou 2, **caractérisé par** au moins un capteur de température (10, 11) disposé dans la ligne d'échappement (8), lequel est analysé en vue de l'ajustement du dispositif de dosage (7).

4. Dispositif selon l'une quelconque des revendications 1 à 3, **caractérisé par** un capteur de différence de pression (12) qui détermine la différence de pression sur le filtre à particules (4), à partir de laquelle un état de charge du filtre à particules (4) peut être déterminé.

5. Procédé de post-traitement de gaz d'échappement d'un moteur à combustion interne suralimenté à deux étages au moyen d'un dispositif de post-traitement de gaz d'échappement (1), le dispositif de post-traitement de gaz d'échappement (1) présentant un filtre à particules (4), un catalyseur d'oxydation (3) monté en amont du filtre à particules (4) et un dispositif de dosage (7) pour introduire un agent de régénération dans une ligne d'échappement (8), **caractérisé en ce qu'**un agent de régénération pour la régénération thermique d'un filtre à particules (4) chargé de suie est installé entre une turbine haute pression (5) et une turbine basse pression (6) dans la ligne d'échappement (8), le catalyseur d'oxydation (3) étant disposé dans la ligne d'échappement (8) après la turbine basse pression (6).

6. Procédé selon la revendication 5, **caractérisé en ce que** l'installation du moyen de régénération dans la ligne d'échappement (8) s'effectue de telle sorte que la turbine basse pression (6), en tant qu'élément mélangeur actif, provoque un mélange uniforme de l'agent de régénération et du gaz d'échappement dans la ligne d'échappement (8), et un catalyseur d'oxydation (3) disposé dans la ligne d'échappement (8) est sollicité de manière uniforme avec l'agent réducteur.
